# EUROPEAN PATENT SPECIFICATION

(11) **EP 3 628 140 B1**
(45) Date of publication and mention of the grant of the patent: **07.06.2023**
(21) Application number: 18315029.1
(22) Date of filing: 28.09.2018
(51) Int. Cl.: A01D 46/28

(54) **FRUIT HARVESTER**
OBSTERNTEMASCHINE
RÉCOLTEUSE DE FRUITS

(43) Date of publication of application: 01.04.2020
(73) Proprietor: CNH Industrial France S.A.S., 91150 Morigny-Champigny (FR)
(72) Inventor: Chovet, Rogelio, 9840 De Pinte (BE); Le Brech, Laurent, 85170 Le Poiré-sur-Vie (FR); Roberge, Martin, Saskatoon, S7J 184 (CA)
(74) Representative: CNH Industrial IP Department

(56) References cited:
- WO-A1-2012/126610
- BE-A- 554 199
- CA-A- 1 115 180
- DE-A1- 3 505 385
- FR-A2- 2 446 060
- LU-A1- 32 528
- US-A- 1 331 007
- US-A1- 2015 208 581

## Description

### BACKGROUND OF THE INVENTION

The present invention relates to harvesters for harvesting fruit, such as grapes or olives, and, more specifically to cleaning fans and cleaning fan systems used in such harvesters.

A fruit harvester in the form of a self-propelled grape harvester includes a chassis which carries an onboard power plant and several onboard sub-systems for processing the grapes. The grape harvester straddles and traverses along at least one row of grape vines, and a picking system separates the grapes and Material Other than Grapes (referred to as "MOG", such as leaves, stems, wood debris, etc.) from the vines. The picking system typically is in the form of "pivotal strikers" or "trunk shakers". The pivotal strikers can include a double bank of flexible horizontal rods that strike and shake the vine to remove the fruit. The trunk shakers can include parallel skiis oriented on edge that move from side to side to impart horizontal vibration to the vines for removal of the grapes and MOG.

A conveying system transports the grapes and MOG to a cleaning system, which in turn separates the grapes from the MOG and cleans the grapes. The cleaning system can include one or more cleaning fans, a sorting table, and a destemmer.

The sorting table can include a combination of conveying rollers and sorting rollers, which can be optimized for different sizes of grapes. The grapes which are dropped on the conveying rollers are transported to the sorting rollers, where the grapes are sorted from the MOG. The sorting rollers can be configured with an adjustable gap between the sorting rollers such that the grapes fall through and the MOG is transported to the end of the sorting table and discharged.

The destemmer removes the central stalk or stems from the grapes in a cluster/bunch of grapes. A destemmer can include a box or box-like structure which is carried by and moves in an oscillating manner within a frame. The berries (grapes) are supplied to the inlet of the box-like structure, which is shook (aggressively) using an eccentric drive to separate the berries from the stalk and stems. The berries are expelled through holes formed in the in the bottom and top walls of the box, and the rafle (central stalk of the bunch) and stems are expelled at the outlet of the box.

The one or more cleaning fans can be positioned upstream in the cleaning system, and remove larger MOG from the stream of crop material by suction and discharge the larger MOG, such as behind the harvester. Cleaning fans are typically configured as centrifugal fans. A centrifugal fan also is typically noisy during operation. Since modern vineyards may also likely be located in or near to residential neighborhoods, a noisy cleaning fan can be objectionable. A centrifugal fan is a radially operating fan which provides good pressure increase characteristics at the fan outlet, but lacks in mass flow characteristics. The centrifugal cleaning fan receives air axially into the fan inlet, compresses the air, and discharges the air radially from the fan outlet. With the fan positioned above an area to be cleaned, the MOG can be drawn into the fan in a generally vertical direction and discharged from the radial outlet in a general horizontal direction toward the rear of the harvester.

WO 2012/126610 A1 describes a grape harvester for picking grapes from pergola or tendone trellis with cleaning fans.

LU 32 528 A1 describes an installation to chop straw with cutting tools arranged in the inlet of the fan.

CA 1 115 180 A describes an improved conveying apparatus for a forage harvester.

DE 35 05385 A describes the use of a mixed flow fan in an airconditioning or ventilation duct.

US 2015/0208581 A describes a conveyor system for a harvester, including a conveyor with openings and an agitator that is configured to impart an agitating motion to the conveyor to aid in the separation of materials.

### SUMMARY OF THE INVENTION

The invention in one form is directed to a fruit harvester comprising a cleaning fan system including at least one cleaning fan, each cleaning fan including an inlet and an outlet. The at least one cleaning fan has a rotor with a frustoconically shaped hub and a plurality of blades, each of the blades being attached to the hub. The cleaning fan system is characterized in that the at least one cleaning fan is configured as a mixed flow fan, the hub including a smaller diameter inlet end and a larger diameter outlet end. Each of the blades curves from the inlet end toward the outlet end, relative to a direction of rotation of the rotor, whereby air is blown during operation both axially and radially. At least one intake duct is provided in association with the at least one cleaning fan, with each intake duct including at least one inlet and an outlet. Each inlet is positioned in association with an area to be cleaned on the fruit harvester, and the outlet is coupled with an inlet of a corresponding cleaning fan.

In another form of the invention, each cleaning fan has a rotor with an axis of rotation, and each cleaning fan is configured with one of a generally horizontal arrangement, a generally vertical arrangement or an inclined arrangement, relative to the corresponding axis of rotation.

In another form of the invention, the at least one cleaning fan comprises a single cleaning fan with a horizontal arrangement, and the at least one intake duct comprises a single intake duct including a split Y configuration with two inlets.

In another form of the invention, each of the two inlets is positioned in association with a lateral conveyor.

In yet another form of the invention, each of the two inlets has a bottom opening and side opening, and further including a pair of material shredders, each said material shredder being located at a respective said inlet.

In yet another form of the invention, the at least one cleaning fan comprises two cleaning fans, each with a horizontal arrangement, and the at least one intake duct comprises two intake ducts, each of the intake ducts being associated with a respective one of the cleaning fans.

In yet another form of the invention, each of the two intake ducts includes an inlet positioned in association with a respective lateral conveyor.

In a further form of the invention, each of the two inlets has a bottom opening and a side opening, and further including a pair of material shredders, each of the material shredders being located at a respective one of the inlets.

In a further form of the invention, each of the intake ducts includes at least one clean out hatch.

In a still further form of the invention, each of the intake ducts is inclined slightly downwardly toward the respective inlet to allow liquid to drain toward the inlet.

In another form of the invention, each cleaning fan is configured with an inclined arrangement, and each cleaning fan has an inlet positioned in association with at least one lateral conveyor.

In another form of the invention, each cleaning fan is configured with a generally vertical arrangement, and each cleaning fan has an inlet positioned in association with at least one lateral conveyor.

In a further form of the invention, one or more discharge ducts are coupled with an outlet of a respective cleaning fan and have a 90° bend.

In a still further form of the invention, the at least one cleaning fan includes a housing having an inlet and an outlet, and an air flow through the at least one cleaning fan at each of the housing inlet and the housing outlet is approximately parallel to an axis of rotation of the hub.

In a still further form of the invention, the housing is configured as a two part housing including an inlet housing portion with a circular shaped housing inlet and an outlet housing portion with an annular shaped housing outlet.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is an exploded perspective view of an embodiment of a mixed flow cleaning fan;
Fig. 2 illustrates an embodiment of a cleaning fan system of the present invention, which can include the mixed flow cleaning fan shown in Fig. 1, and has a Y shaped intake duct with two inlets;
Fig. 3 illustrates another embodiment of a cleaning fan system of the present invention, with a cleaning fan configured with a generally horizontal arrangement;
Fig. 4 shows in more detail the intake duct shown on the cleaning fan system of Fig. 3;
Fig. 5 illustrates another embodiment of a cleaning fan system of the present invention, with a cleaning fan configured with an inclined arrangement;
Fig. 6 illustrates another embodiment of a cleaning fan system of the present invention, with a cleaning fan configured with a different inclined arrangement;
Fig. 7 illustrates another embodiment of a cleaning fan system of the present invention, with a cleaning fan configured with a generally vertical arrangement; and
Fig. 8 is a perspective view of the cleaning fan shown in Fig. 7, with an attached discharge duct.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

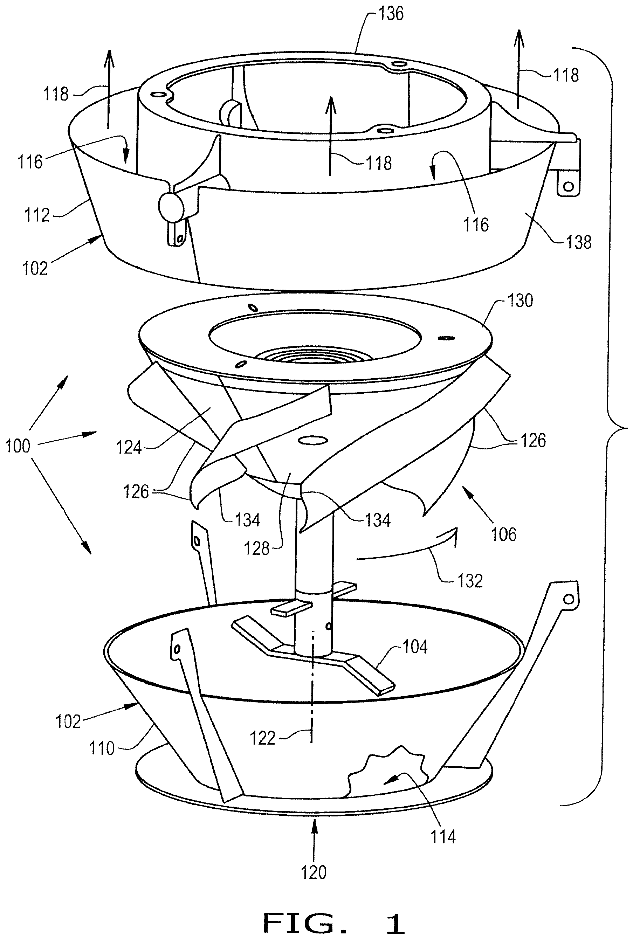

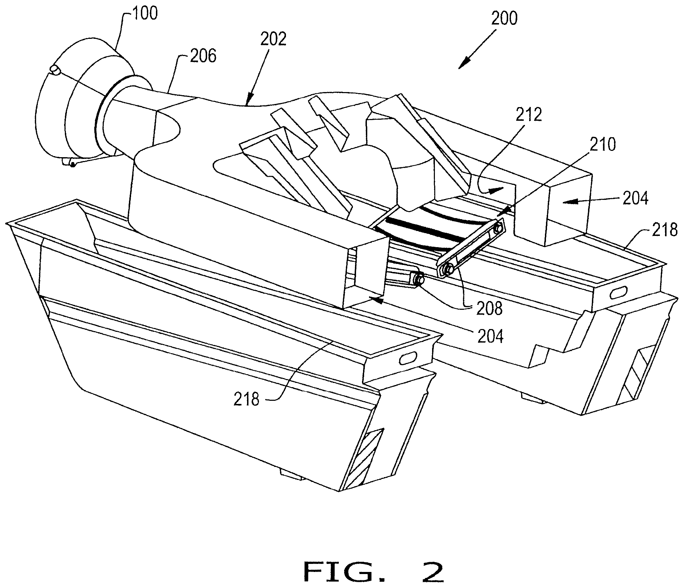

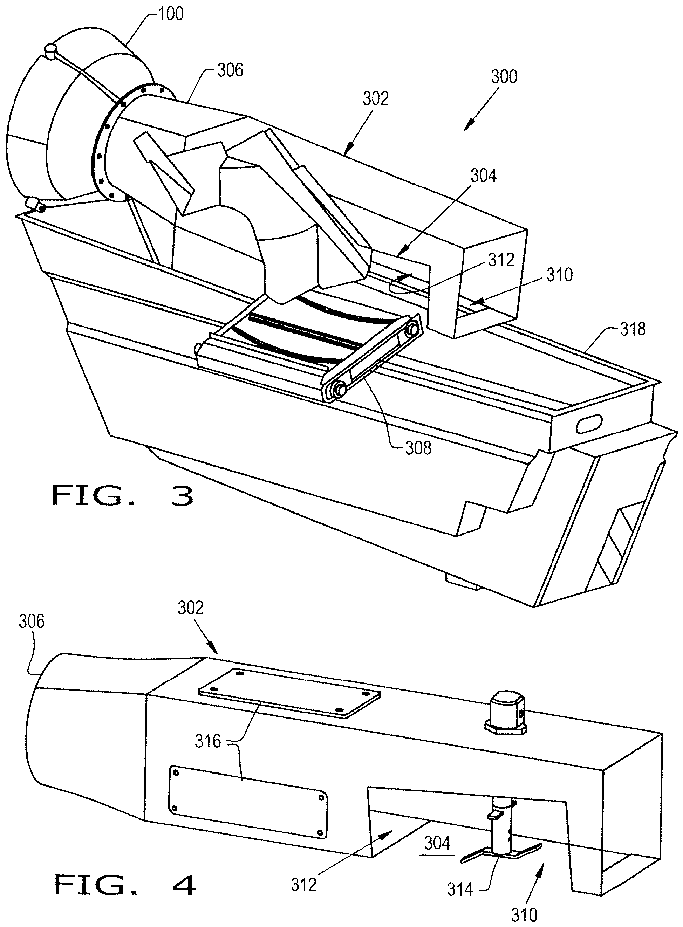

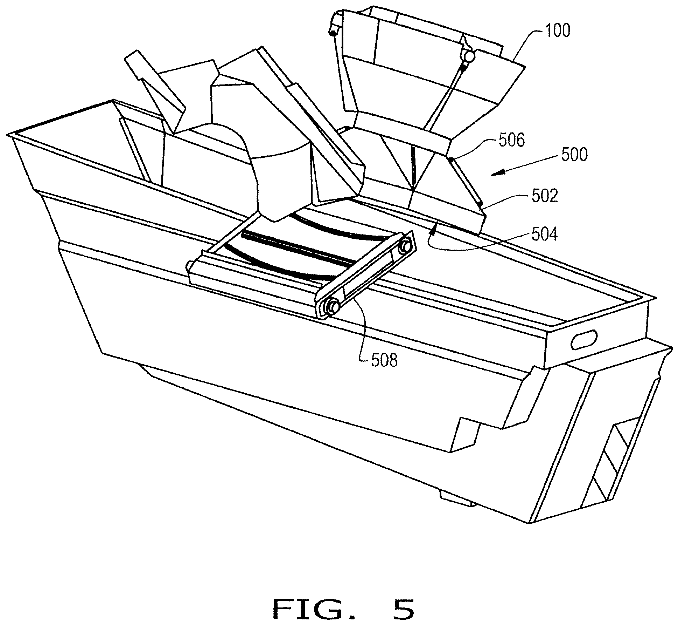

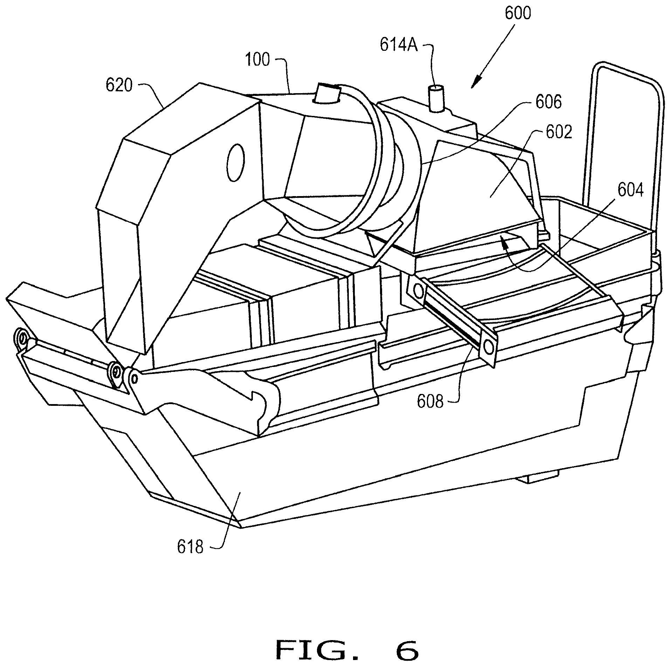

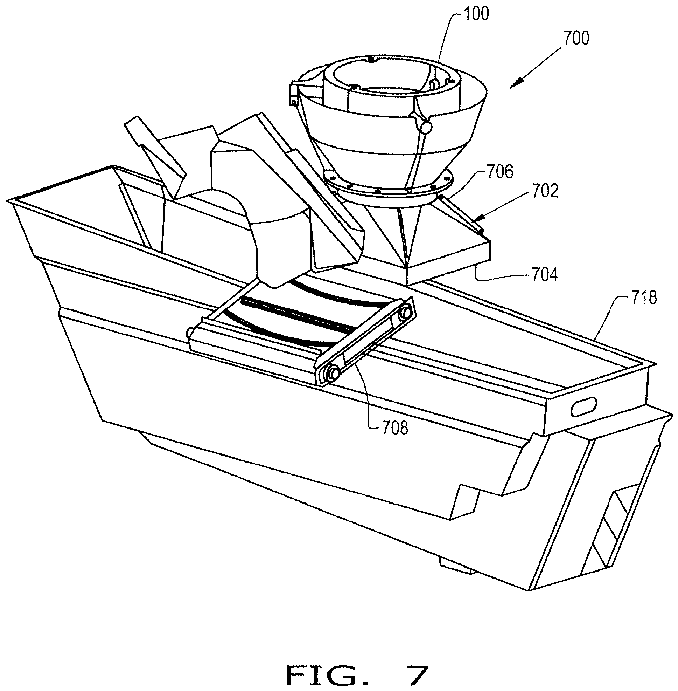

Referring now to Fig. 1, there is shown an embodiment of a cleaning fan 100 of the present invention which can be used with a fruit harvester, such as a grape or olive harvester. The cleaning fan 100 can form part of a cleaning fan system of the present invention, such as the cleaning fan system 200 (Fig. 2), 300 (Fig. 3), 500 (Fig. 5), 600 (Fig. 6) or 700 (Fig. 7).

As indicated above, the cleaning fan 100 removes larger MOG from the stream of crop material by suction and discharges the larger MOG from the harvester. When configured as a grape harvester, the grape bunches or clusters are removed from the grape vines, and conveyed rearwardly and upwardly by suitable conveying mechanisms (not shown). One or more cleaning fans 100 can be located at the upstream end of the cleaning system to remove the MOG.

The cleaning fan 100 generally includes an outer housing 102, a material shredder 104, and a rotor 106. The housing 102 is constructed as a two-piece housing allowing the rotor 106 to be placed therein, including an inlet housing portion 110 and an outlet housing portion 112. The inlet housing portion 110 includes an open circular inlet 114 (partially visible with part of the housing portion 110 fragmented away in Fig. 1) allowing the grapes and MOG to be drawn axially into the rotor 106. The outlet housing portion 112 includes an annular outlet 116 of sufficient cross sectional area to allow discharge of the shredded MOG. In the embodiment shown, the outlet housing portion 112 includes an inner annular housing part 136 which lies closely adjacent to the larger diameter outlet end 130 of the hub 124, and an outer annular housing part 138 which is concentric with the inner annular housing part 136 and defines the annular shaped outlet 116. The flow direction 118 of the MOG from the outlet 116 is generally parallel to the flow direction 120 of the MOG entering the inlet 114 to the inlet housing portion 110, and both flows are generally parallel to the axis of rotation 122 of the rotor 106.

The cleaning fan 100 is configured as a mixed flow fan, combining the high-volume flow characteristics of an axial fan with the increased pressure delivery characteristics of a centrifugal fan. The rotor 106 provides the cleaning fan 100 with mixed flow characteristics, and includes a frustoconically shaped hub 124 and a plurality of blades 126. The hub 124 has a smaller diameter inlet end 128 and a larger diameter outlet end 130. Each of the blades 126 is attached to the hub 124 and curves from the inlet end 128 toward the outlet end 130, relative to a direction of rotation 132 of the rotor 106, whereby air is blown during operation both axially and radially. This combination of axial and radial forces on the air passing through the rotor blades 126 maintains a high flow rate, boosts the air pressure from the outlet of the fan 100, with quiet operating performance.

Each of the blades 126 has a proximal end 134 attached to the hub 124 at or near the inlet end 128, and each of the blades 126 terminates at or near the outlet end 130 of the hub 124. The blades 126 curve in a radial manner toward the outlet end 130, which can be a continuous curve or a stepwise curve with a plurality of adjoining discrete linear segments which generally define a curve.

Referring now to Fig. 2, there is shown an embodiment of a cleaning fan system 200 of the present invention, which can include the mixed flow cleaning fan 100 shown in Fig. 1, and has a single split Y shaped intake duct 202 with two inlets 204 and an outlet 206. Each inlet 204 is positioned in association with an area to be cleaned on the fruit harvester. In the embodiment shown, each inlet 204 is positioned above a respective lateral conveyor 208, but could be positioned at a different location where MOG is to be removed from a flow of crop material. The outlet 206 is coupled with the inlet 114 of the cleaning fan 100. It should be appreciated that a single cleaning fan 100 may be used to remove MOG that enters the two inlets 204 of the intake duct 202 rather than, for example, a cleaning fan associated with each inlet 204, *i.e.,* using two cleaning fans. Using a single cleaning fan 100 to remove MOG, rather than two cleaning fans, may reduce the power requirements and maintenance costs by reducing the number of moving parts. It should be further appreciated that the cleaning fan 100 may be driven by, for example, fluid pressure (hydraulic and/or pneumatic) or electrical power.

Each of the two inlets 204 can be configured with a bottom opening 210 and a side opening 212, providing the inlet with adequate surface area for removal of the MOG from the flow of crop material. An inlet configured in this manner is better visible with respect to the cleaning fan system 300 shown in Figs. 3 and 4. Each of the two inlets 204 can also be optionally configured with a material shredder, also as shown in Fig. 4. The material shredder chops or shreds the MOG in the flow of crop material, and homogenizes the flow of crop material moving through the intake duct 202 and cleaning fan 100. The homogenized flow of material can improve the flow characteristics through the cleaning fan system 200.

The cleaning fan system 200 shown in Fig. 2 lies generally horizontally, meaning that the cleaning fan 100 and the intake duct 202 both lie generally horizontally. The cleaning fan 100 is configured with a generally horizontal arrangement, whereby the axis of rotation of the rotor 106 lies generally horizontally. Likewise, the intake duct 202 also lies generally horizontally, but can lie at a slight downward angle toward the inlets 204 such that any juice flows toward the inlets into the respective bins 210. A cleaning fan system with a generally horizontal arrangement, such as shown in Fig. 1, has been found to be efficient in terms of power requirements, preventing plugs of crop material in the ducts, etc. It should be appreciated that this generally horizontal arrangement is exemplary only and may be modified to account for different fruit harvester configurations such as, for example, when a destemmer is incorporated.

It can be observed from Fig. 1 that the intake duct 202 includes three areas where the flow of crop material turns at 90° angles prior to entering the cleaning fan 100. However, the turns and curves are provided with sufficient sweep angles and lengths to ensure that crop material does not plug within the intake duct 200. In some embodiments, joints at the intersection of two ducts comprise a flexible material, such as rubber, to allow deformation during unloading of storage bins 218.

Referring now to Fig. 3, there is shown another embodiment of a cleaning fan system 300 of the present invention. With this configuration, two cleaning fans 100 and attached intake ducts 302 are provided, one to each side of the fruit harvester, although only one cleaning fan 100 and attached intake duct 302 are shown in Fig. 3 for brevity and clarity sake. It is to be understood that although only one of the cleaning fans 100 and intake ducts 302 is described herein, the other cleaning fan and intake duct is configured similarly in a mirrored fashion.

The intake duct 302 includes an inlet 304 and an outlet 306. The inlet 304 is positioned in association with an area to be cleaned on the fruit harvester. In the embodiment shown, the inlet 304 is positioned above a lateral conveyor 308 (and the inlet to the other intake duct (not shown) is positioned above the other lateral conveyor). However, the inlet 304 could be positioned at a different location where MOG is to be removed from a flow of crop material. The outlet 306 is coupled with the inlet 114 of the cleaning fan 100.

The inlet 304 can be configured with a bottom opening 310 and a side opening 312, providing the inlet 304 with adequate surface area for removal of the MOG from the flow of crop material. The inlet 304 can also be optionally configured with a material shredder 314, shown in more detail in Fig. 4. The intake duct 302 can also optionally include at least one clean out hatch 316, as shown in Fig. 4. In the illustrated embodiment, the intake duct includes two clean out hatches 316, one located on the top and one on the side. However, the number and location of the clean out hatches can vary from one application to another. The intake duct 302 may include one or more fluid connectors, in addition or alternatively to the clean out hatches 316, such as an internal nozzle that can connect to a source of cleaning fluid, such as a water hose, for cleanup.

The cleaning fan system 300 shown in Fig. 3 lies generally horizontally, meaning that both the cleaning fan 100 and the intake duct 302 lie generally horizontal. The intake duct 302 can be shaped, such as inclined slightly downwardly, toward the inlet 304 to allow liquid to drain toward the inlet 304 and into a storage bin 318 (or externally drained) below. While the intake duct 302 is illustrated as inclined slightly downwardly, it should be appreciated that the shape of the intake duct 302 may be altered to, for example, fit a destemmer or other component, so long as the shape of the intake duct 302 does not suddenly change in its section or direction.

Referring now to Fig. 5, there is shown another embodiment of a cleaning fan system 500 of the present invention, with the cleaning fan 100 configured with an inclined arrangement. With this embodiment, the cleaning fan system 500 includes a short intake duct 502 having an inlet 504 and an outlet 506. The intake duct can have a shape transitioning from the circular inlet of the cleaning fan 100 to any desired shape at the inlet 504 to the intake duct 502, such as the square inlet 504. The inlet 504 is positioned in association with an area where MOG is to be removed from the flow of crop material, and the outlet 506 is attached to the inlet of the cleaning fan 100. In the embodiment shown, the inlet 504 of the intake duct 502 is positioned in association with a lateral conveyor 508.

Referring now to Fig. 6, there is shown another embodiment of a cleaning fan system 600 of the present invention, with the cleaning fan 100 configured with an inclined arrangement. With this embodiment, the intake duct 602 is generally pyramid shaped with an inlet 604 and an outlet 606. The cleaning fan 100 couples at an inclined angle to one of the inclined side walls of the intake duct 602. In the embodiment shown, the inlet 604 of the intake duct 602 is positioned in association with and between a pair of lateral conveyors 608, one of which is visible. An optional material shredder (not visible) can be placed within the intake duct 602, as is apparent by the drive shaft 614A extending from the top of the intake duct 602. A discharge duct 620 is coupled with the outlet 116 of the cleaning fan 100. The discharge duct 620 does not include abrupt changes in direction to avoid excessive power requirements, flow problems, etc, as described above with respect to the intake duct(s). Further, the inclined configuration of the cleaning fan 100 allows a destemmer to fit right under the discharge duct 620.

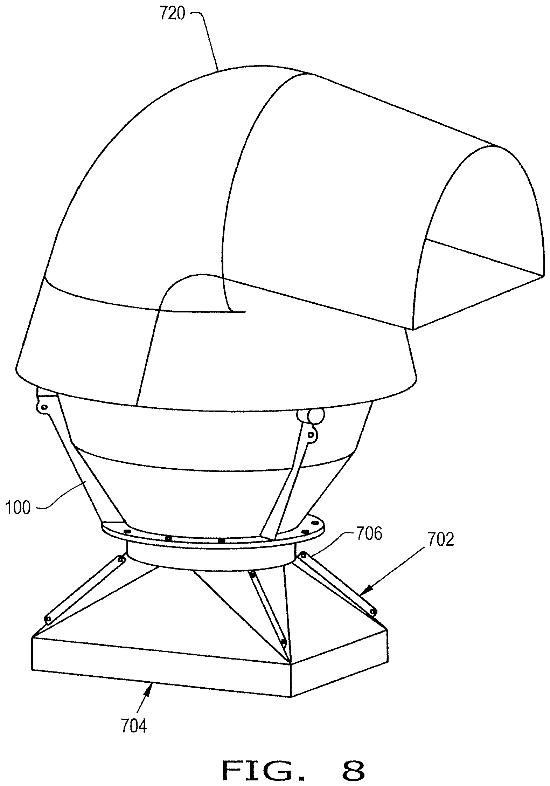

Referring now to Figs. 7 and 8, there is shown another embodiment of a cleaning fan system 700 of the present invention, with the cleaning fan 100 configured with a generally vertical arrangement. With this embodiment, the cleaning fan system 700 includes a short intake duct 702 having an inlet 704 and an outlet 706. The intake duct can have a shape transitioning from the circular inlet of the cleaning fan 100 to any desired shape at the inlet 704 to the intake duct 702, such as the square inlet 704. The inlet 704 is positioned in association with an area where MOG is to be removed from the flow of crop material, and the outlet 706 is attached to the inlet of the cleaning fan 100. In the embodiment shown, the inlet 704 of the intake duct 702 is positioned in association with and between a pair of lateral conveyors 708, one of which is visible. A discharge duct 720 can be coupled with the outlet 116 of the cleaning fan 100 (Fig. 8). The discharge duct 720 includes a 90° bend, but is configured with a sweep angle and curve length which avoids abrupt changes in direction.

Any of the cleaning fan systems 200, 300, 500, 600 and/or 700 can be configured with one or more optional material shredders located at or near the inlet to the intake duct(s). The material shredder(s) homogenize the flow of air and MOG which is drawn into the cleaning fan 100. The material shredder(s) can be coupled with and driven by the hub 124 of the cleaning fan 100 (in the case of a short intake duct which is inline with the cleaning fan, as shown in Figs. 5 or 7), or can be separately driven using another power source such as an electric or hydraulic motor.

During operation of the grape harvester, grape bunches including stalks and stems are conveyed rearwardly and upwardly on the harvester for further processing. The cleaning fan 100 is positioned at a suitable location toward the upstream end of the cleaning system, such as at the discharge location onto the upstream ends of the two lateral conveyors. In some embodiments, the harvester is configured so stems that do not include any grapes also fall onto the lateral conveyors for aspiration by the cleaning fan 100. The cleaning fan 100 draws the heavier MOG toward the inlet to the intake duct, and the MOG is then drawn through the intake duct toward the inlet to the cleaning fan. The optional material shredder shreds the MOG into smaller pieces. The mixed flow fan 100 delivers the MOG with improved mass flow and pressure characteristics to the discharge duct, and the MOG is discharged from the discharge duct.

## Claims

1. A fruit harvester comprising a cleaning fan system (200, 300, 500, 600, 700), said system comprising:
at least one cleaning fan (100), each said cleaning fan (100) including and inlet (114) and an outlet (116); and
at least one intake duct (202, 302, 502, 602, 702) is provided in association with the at least one cleaning fan (100), each said intake duct (202, 302, 502, 602, 702) including at least one inlet (204, 304, 504, 604, 704) and an outlet (206, 306, 506, 606, 706), each said inlet (204, 304, 504, 604, 704) being suitable for positioning in association with an area to be cleaned on the fruit harvester, the outlet (206, 306, 506, 606, 706) being coupled with an inlet (114) of a corresponding said cleaning fan (100);
**characterized in that:**
the at least one cleaning fan (100) is configured as a mixed flow fan with a rotor (106) having a frustoconically shaped hub (124) and a plurality of blades (126), the hub (124) including a smaller diameter inlet end (128) and a larger diameter outlet end (130), each of the blades (126) being attached to the hub (124) and curving forward from the inlet end (128) toward the outlet end (130), relative to a direction of rotation (132) of the rotor (106), whereby air is blown during operation both axially and radially.

2. The fruit harvester of claim 1, wherein each said cleaning fan (100) has a rotor (106) with an axis of rotation (122), and each said cleaning fan (100) is configured with one of a generally horizontal arrangement, a generally vertical arrangement or an inclined arrangement, relative to the corresponding axis of rotation (122).

3. The fruit harvester of claim 2, wherein the at least one cleaning fan (100) comprises a single cleaning fan with a horizontal arrangement, and the at least one intake duct (204) comprises a single intake duct including a split Y configuration with two inlets (204).

4. The fruit harvester of claim 3, wherein each of the two inlets (204) is suitable for positioning in association with a lateral conveyor (208) of the fruit harvester.

5. The fruit harvester of claim 4, wherein each of the two inlets (204, 304) has a bottom opening (310) and side opening (312), and further including a pair of material shredders (314), each said material shredder (314) being located at a respective said inlet (204, 304).

6. The fruit harvester of claim 2, wherein the at least one cleaning fan (100) comprises two cleaning fans (100), each with a horizontal arrangement, and the at least one intake duct (302) comprises two intake ducts (302), each of the intake ducts (302) being associated with a respective one of the cleaning fans (100).

7. The fruit harvester of claim 6, wherein each of the two intake ducts (302) includes an inlet (304) suitable for positioning in association with a respective lateral conveyor (308) of the fruit harvester.

8. The fruit harvester of claim 7, wherein each of the two inlets (304) has a bottom opening (310) and a side opening (312), and further including a pair of material shredders (314), each of the material shredders being located at a respective one of the inlets (304).

9. The fruit harvester of claims 6 through 8, wherein each of the intake ducts (302) includes at least one clean out hatch (316).

10. The fruit harvester of claims 7 through 9, wherein each of the intake ducts (302) is inclined slightly downwardly toward the respective inlet (304) to allow liquid to drain toward the inlet (304) or externally.

11. The fruit harvester of claim 2, wherein each said cleaning fan (100) is configured with an inclined arrangement, and each said cleaning fan (100) has an inlet suitable for positioning in association with at least one lateral conveyor (506, 508) of the fruit harvester.

12. The fruit harvester of claim 2, wherein each said cleaning fan (100) is configured with a generally vertical arrangement, and each said cleaning fan (100) has an inlet (114) suitable for positioning in association with at least one lateral conveyor (708) of the fruit harvester.

13. The fruit harvester of claim 12, further including at least one discharge duct (620), each said discharge duct (620) being coupled with an outlet (116) of a respective said cleaning fan (100) and having a 90° bend.

14. The fruit harvester according to any of the preceding claims, wherein the at least one cleaning fan (100) includes a housing (102) having an inlet (114) and an outlet (116), and wherein an air flow through the at least one cleaning fan (100) at each of the housing inlet (114) and the housing outlet (116) is approximately parallel to an axis of rotation (122) of the hub (106).

15. The fruit harvester according to any of the preceding claims, wherein the housing (102) is configured as a two part housing including an inlet housing portion (110) with a circular shaped housing inlet (114) and an outlet housing portion (112) with an annular shaped housing outlet (116).

## Patentansprüche

1. Fruchterntemaschine mit einem Reinigungsgebläsesystem (200, 300, 500, 600, 700), wobei das System umfasst:
mindestens ein Reinigungsgebläse (100), wobei jedes Reinigungsgebläse (100) einen Einlass (114) und einen Auslass (116) aufweist; und
mindestens einen Ansaugkanal (202, 302, 502, 602, 702), der in Verbindung mit dem mindestens einen Reinigungsgebläse (100) bereitgestellt ist, wobei jeder Ansaugkanal (202, 302, 502, 602, 702) mindestens einen Einlass (204, 304, 504, 604, 704) und einen Auslass (206, 306, 506, 606, 706) aufweist, wobei jeder Einlass (204, 304, 504, 604, 704) zur Positionierung gemäß einem zu reinigenden Bereich auf der Fruchterntemaschine geeignet ist, wobei der Auslass (206, 306, 506, 606, 706) mit einem Einlass (114) eines entsprechenden Reinigungsgebläses (100) gekoppelt ist;
**dadurch gekennzeichnet, dass**:
das mindestens eine Reinigungsgebläse (100) als ein Schraubenradgebläse mit einem Rotor (106) ausgebildet ist, der eine kegelstumpfförmige Nabe (124) und eine Mehrzahl von Schaufeln (126) aufweist, wobei die Nabe (124) ein Einlassende (128) mit einem kleineren Durchmesser und ein Auslassende (130) mit einem größeren Durchmessers aufweist, wobei jede der Schaufeln (126) an der Nabe (124) angebracht ist und von einem Einlassende (128) zu einem Auslassende (130) relativ zu einer Drehrichtung (132) des Rotors (106) nach vorne gekrümmt ist, wobei Luft während des Betriebs sowohl axial als auch radial ausgestoßen wird.

2. Fruchterntemaschine nach Anspruch 1, wobei jedes Reinigungsgebläse (100) einen Rotor (106) mit einer Drehachse (122) umfasst und jedes Reinigungsgebläse (100) in einer im Wesentlichen horizontalen Anordnung, einer im Wesentlichen vertikalen Anordnung oder einer geneigten Anordnung relativ zu der entsprechenden Drehachse (122) ausgebildet ist.

3. Fruchterntemaschine nach Anspruch 2, wobei das mindestens eine Reinigungsgebläse (100) ein einziges Reinigungsgebläse in einer horizontalen Anordnung umfasst und der mindestens eine Ansaugkanal (204) einen einzigen Ansaugkanal mit einer geteilten Y-Anordnung mit zwei Einlässen (204) umfasst.

4. Fruchterntemaschine nach Anspruch 3, wobei jeder der zwei Einlässe (204) zur Positionierung gemäß einer lateralen Fördereinrichtung (208) der Fruchterntemaschine geeignet ist.

5. Fruchterntemaschine nach Anspruch 4, wobei jeder der zwei Einlässe (204, 304) eine Bodenöffnung (310) und eine Seitenöffnung (312) aufweist und weiterhin ein Paar von Materialzerkleinerern (314) umfasst, wobei jeder Materialzerkleinerer (314) an einem entsprechenden Einlass (204, 304) angeordnet ist.

6. Fruchterntemaschine nach Anspruch 2, wobei das mindestens eine Reinigungsgebläse (100) zwei Reinigungsgebläse (100) in jeweils einer horizontalen Anordnung umfasst und der mindestens eine Ansaugkanal (302) zwei Ansaugkanäle (302) umfasst, wobei jeder der Ansaugkanäle (302) einem entsprechenden Reinigungsgebläse (100) zugeordnet ist.

7. Fruchterntemaschine nach Anspruch 6, wobei jeder der zwei Ansaugkanäle (302) einen Einlass (304) zur Positionierung gemäß einer entsprechenden lateralen Fördereinrichtung (308) der Fruchterntemaschine aufweist.

8. Fruchterntemaschine nach Anspruch 7, wobei jeder der zwei Einlässe (304) eine Bodenöffnung (310) und eine Seitenöffnung (312) aufweist und weiterhin ein Paar von Materialzerkleinerer (314) umfasst, wobei jeder Materialzerkleinerer an einem entsprechenden Einlass (304) angeordnet ist.

9. Fruchterntemaschine nach einem der Ansprüche 6 bis 8, wobei jeder der Ansaugkanäle (302) mindestens eine Reinigungsklappe (316) aufweist.

10. Fruchterntemaschine nach einem der Ansprüche 7 bis 9, wobei jeder der Ansaugkanäle (302) zu dem entsprechenden Einlass (304) hin leicht nach unten geneigt ist, um Flüssigkeiten zu erlauben zu dem Einlass (304) hin oder nach außen hin abzulaufen.

11. Fruchterntemaschine nach Anspruch 2, wobei jedes Reinigungsgebläse (100) in einer geneigten Anordnung ausgebildet ist und wobei jedes Reinigungsgebläse (100) einen Einlass aufweist, der zur Positionierung gemäß mindestens einer lateralen Fördereinrichtung (506, 508) der Fruchterntemaschine geeignet ist.

12. Fruchterntemaschine nach Anspruch 2, wobei jedes Reinigungsgebläse (100) in einer im Wesentlichen vertikalen Anordnung ausgebildet ist und wobei jedes Reinigungsgebläse (100) einen Einlass (114) aufweist, der zur Positionierung gemäß mindestens einer lateralen Fördereinrichtung (708) der Fruchterntemaschine geeignet ist.

13. Fruchterntemaschine nach Anspruch 12, weiterhin umfassend mindestens einen Auslasskanal (620), wobei jeder Auslasskanal (620) mit einem Auslass (116) eines entsprechenden Reinigungsgebläses (100) gekoppelt ist und eine 90° Biegung aufweist.

14. Fruchterntemaschine nach einem der vorhergehenden Ansprüche, wobei das mindestens eine Reinigungsgebläse (100) ein Gehäuse (102) mit einem Einlass (114) und einem Auslass (116) aufweist und wobei ein Luftstrom durch das mindestens eine Reinigungsgebläse (100) sowohl an dem Gehäuseeinlass (114) als auch dem Gehäuseauslass (116) in etwa parallel zu einer Drehachse (122) der Nabe (106) ist.

15. Fruchterntemaschine nach einem der vorhergehenden Ansprüche, wobei das Gehäuse (102) als ein zweiteiliges Gehäuse ausgebildet ist, das einen Einlassgehäuseabschnitt (110) mit einem kreisförmig geformten Gehäuseeinlass (114) und einen Auslassgehäuseabschnitt (112) mit einem ringförmig geformten Gehäuseauslass (116) aufweist.

## Revendications

1. Une récolteuse de fruits comprenant un système de ventilateur de nettoyage (200, 300, 500, 600, 700), ledit système comprenant :
au moins un ventilateur de nettoyage (100), chaque ventilateur de nettoyage (100) comprenant une entrée (114) et une sortie (116) ; et
au moins un conduit d'admission (202, 302, 502, 602, 702) est prévu en association avec l'au moins un ventilateur de nettoyage (100), chaque conduit d'admission (202, 302, 502, 602, 702) comprenant au moins une entrée (204, 304, 504, 604, 704) et une sortie (206, 306, 506, 606, 706), chaque entrée (204, 304, 504, 604, 704) étant adaptée à être positionnée en association avec une zone à nettoyer sur la récolteuse de fruits, la sortie (206, 306, 506, 606, 706) étant couplée à une entrée (114) d'un ventilateur de nettoyage (100) correspondant ;
**caractérisée en ce que** :
l'au moins un ventilateur de nettoyage (100) est configuré comme un ventilateur à flux mixte avec un rotor (106) ayant un moyeu de forme tronconique (124) et une pluralité de pales (126), le moyeu (124) comprenant une extrémité d'entrée de petit diamètre (128) et une extrémité de sortie de plus grand diamètre (130), chacune des pales (126) étant fixée au moyeu (124) et se courbant vers l'avant à partir de l'extrémité d'entrée (128) vers l'extrémité de sortie (130), par rapport à un sens de rotation (132) du rotor (106), de sorte que l'air est soufflé en cours de fonctionnement à la fois axialement et radialement.

2. Récolteuse de fruits selon la revendication 1, dans laquelle chaque ventilateur de nettoyage (100) a un rotor (106) avec un axe de rotation (122), et chaque ventilateur de nettoyage (100) est configuré avec une disposition généralement horizontale, une disposition généralement verticale ou une disposition inclinée, par rapport à l'axe de rotation correspondant (122).

3. Récolteuse de fruits selon la revendication 2, dans laquelle au moins un ventilateur de nettoyage (100) comprend un seul ventilateur de nettoyage avec une disposition horizontale, et l'au moins un conduit d'admission (204) comprend un seul conduit d'admission avec une configuration en Y divisé avec deux entrées (204).

4. Récolteuse de fruits selon la revendication 3, dans laquelle chacune des deux entrées (204) est adaptée à être positionnée en association avec un convoyeur latéral (208) de la récolteuse de fruits.

5. Récolteuse de fruits selon la revendication 4, dans laquelle chacune des deux entrées (204, 304) a une ouverture inférieure (310) et une ouverture latérale (312), et comprenant en outre une paire de broyeurs de matériaux (314), chaque broyeur de matériaux (314) étant situé à une entrée respective (204, 304).

6. Récolteuse de fruits selon la revendication 2, dans laquelle au moins un ventilateur de nettoyage (100) comprend deux ventilateurs de nettoyage (100), chacun avec une disposition horizontale, et au moins un conduit d'admission (302) comprend deux conduits d'admission (302), chacun des conduits d'admission (302) étant associé à un ventilateur de nettoyage (100) respectif.

7. Récolteuse de fruits selon la revendication 6, dans laquelle chacun des deux conduits d'admission (302) comprend une entrée (304) adaptée à être positionnée en association avec un convoyeur latéral respectif (308) de la récolteuse de fruits.

8. Récolteuse de fruits selon la revendication 7, dans laquelle chacune des deux entrées (304) a une ouverture inférieure (310) et une ouverture latérale (312), et comprenant en outre une paire de broyeurs de matériaux (314), chaque broyeur de matériaux étant situé à l'une des entrées respectives (304).

9. Récolteuse de fruits selon les revendications 6 à 8, dans laquelle chacun des conduits d'admission (302) comprend au moins une trappe de nettoyage (316).

10. Récolteuse de fruits selon les revendications 7 à 9, dans laquelle chacun des conduits d'admission (302) est légèrement incliné vers le bas en direction de l'entrée respective (304) pour permettre au liquide de s'écouler vers l'entrée (304) ou vers l'extérieur.

11. Récolteuse de fruits selon la revendication 2, dans laquelle chaque ventilateur de nettoyage (100) est configuré avec une disposition inclinée, et chaque ventilateur de nettoyage (100) a une entrée adaptée à être positionnée en association avec au moins un convoyeur latéral (506, 508) de la récolteuse de fruits.

12. Récolteuse de fruits selon la revendication 2, dans laquelle chaque ventilateur de nettoyage (100) est configuré avec un dispositif généralement vertical, et chaque ventilateur de nettoyage (100) a une entrée (114) adaptée à être positionnée en association avec au moins un convoyeur latéral (708) de la récolteuse de fruits.

13. Récolteuse de fruits de la revendication 12, comprenant en outre au moins un conduit d'évacuation (620), chaque conduit d'évacuation (620) étant couplé à une sortie (116) d'un ventilateur de nettoyage (100) respectif et présentant un angle de 90°.

14. Récolteuse de fruits selon l'une quelconque des revendications précédentes, dans laquelle l'au moins un ventilateur de nettoyage (100) comprend un boîtier (102) ayant une entrée (114) et une sortie (116), et dans laquelle un flux d'air à travers l'au moins un ventilateur de nettoyage (100) à chacune des entrées (114) et des sorties (116) du boîtier est approximativement parallèle à un axe de rotation (122) du moyeu (106).

15. Récolteuse de fruits selon l'une des revendications précédentes, dans laquelle le boîtier (102) est configuré comme un boîtier en deux parties comprenant une partie de boîtier d'entrée (110) avec une entrée de boîtier de forme circulaire (114) et une partie de boîtier de sortie (112) avec une sortie de boîtier de forme annulaire (116).
